(19) **Europäisches Patentamt**
**European Patent Office**
**Office européen des brevets**

(11) **EP 1 867 086 B1**

(12) **FASCICULE DE BREVET EUROPEEN**

(45) Date de publication et mention
de la délivrance du brevet:
**20.08.2008 Bulletin 2008/34**

(51) Int Cl.:
*H04J 14/02* *(2006.01)*    *H04J 3/16* *(2006.01)*
*H04J 7/00* *(2006.01)*    *H04B 10/155* *(2006.01)*
*H04B 10/18* *(2006.01)*

(21) Numéro de dépôt: **06726303.8**

(22) Date de dépôt: **04.04.2006**

(86) Numéro de dépôt international:
**PCT/FR2006/050293**

(87) Numéro de publication internationale:
**WO 2006/106260 (12.10.2006 Gazette 2006/41)**

(54) **TRANSMISSION OPTIQUE ENTRE UNE PREMIERE UNITE ET UNE PLURALITE DE SECONDES UNITES CONNECTEES ENTRE ELLES AU MOYEN D'UN RESEAU D'ACCES OPTIQUE PASSIF**

**OPTISCHE ÜBERTRAGUNG ZWISCHEN EINER ERSTEN EINHEIT UND MEHREREN ZWEITEN EINHEITEN, DIE MITTELS EINES PASSIVEN OPTISCHEN ZUGANGSNETZES VERBUNDEN SIND**

**OPTICAL TRANSMISSION BETWEEN A FIRST UNIT AND A PLURALITY OF SECOND UNITS INTERCONNECTED BY MEANS OF A PASSIVE OPTICAL ACCESS NETWORK**

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **05.04.2005 FR 0503344**

(43) Date de publication de la demande:
**19.12.2007 Bulletin 2007/51**

(73) Titulaire: **France Télécom**
**75015 Paris (FR)**

(72) Inventeurs:
• **PINCEMIN, Erwan**
**F-22290 Gommenec'h (FR)**
• **PAYOUX, Franck**
**F-22300 Lannion (FR)**

(74) Mandataire: **Joly, Jean-Jacques et al**
**Cabinet Beau de Loménie**
**158, rue de l'Université**
**75340 Paris Cédex 07 (FR)**

(56) Documents cités:
**US-A1- 2003 231 885**

• **HATAMI-HANZA H ET AL: "A MULTILEVEL SOLITON COMMUNICATION SYSTEM" JOURNAL OF LIGHTWAVE TECHNOLOGY, IEEE SERVICE CENTER, NEW YORK, NY, US, vol. 15, no. 1, janvier 1997 (1997-01), pages 6-18, XP000642273 ISSN: 0733-8724**
• **JUNG D K ET AL: "Spectrum-sliced bidirectional passive optical network for simultaneous transmission of WDM and digital broadcast video signals" ELECTRONICS LETTERS, IEE STEVENAGE, GB, vol. 37, no. 5, 1 mars 2001 (2001-03-01), pages 308-309, XP006016334 ISSN: 0013-5194**
• **KATO M ET AL: "Single-channel 800 Gbit/s asynchronous all-optical amplitude-division demultiplexing based on polarization-independent GHz Raman soliton in fiber" POSTDEADLINE PAPERS. SUMMARIES OF PAPERS PRESENTED AT THE CONFERENCE ON LASERS AND ELECTRO-OPTICS. CONFERENCE EDITION (IEEE CAT. NO.02CH37337) OPT. SOC. AMERICA WASHINGTON, DC, USA, vol. 2, 2002, pages CPDB4-1, XP009055596 ISBN: 1-55752-705-9**

**EP 1 867 086 B1**

**EP 1 867 086 B1**

**Description**

Domaine technique de l'invention

L'invention se situe dans le domaine de réseaux d'accès optique de type passif ou PON « Passive Optical Network », et plus particulièrement se rapporte au domaine de transmission optique entre une première unité et une pluralité de secondes unités connectées entre elles au moyen d'un réseau d'accès optique passif.

Arrière-plan de l'invention

Actuellement, les réseaux d'accès des opérateurs de télécommunications utilisent majoritairement l'accès filaire portant des technologies comme l'ADSL. L'optique est très peu utilisée, car le coût des infrastructures engendré par l'installation de fibres optiques entre les centraux et les abonnés est prohibitif.
L'utilisation de l'optique dans des réseaux d'accès basés sur des architectures de type PON permet la réalisation d'un bond significatif en termes de capacité, impossible à atteindre par les technologies d'accès filaire et néanmoins inéluctable en raison de la montée en débit des services à destination de l'abonné.
D'une manière générale, les réseaux d'accès de type PON peuvent être de deux types, les PONs dits classiques et les PONs par multiplexage par division de longueurs d'onde WDM.
Les PONs classiques utilisent un accès multiple temporel et ne nécessitent qu'un seul émetteur au niveau du central de transmission. Ils se basent sur l'implémentation de coupleurs optiques 1xN (N étant un nombre de clients ou d'abonnés). Dans ce cas, l'information portée par un signal émise par le central de transmission est envoyée à tous les abonnés et des terminaux spécifiques, disposés chez chacun d'entre eux, permettent alors d'extraire l'information destinée réellement à ce dernier. Ainsi, les données, véhiculées à partir du central de transmission par une longueur d'onde unique, sont démultiplexées temporellement au niveau de chaque terminal client placé chez l'abonné.
Cependant, le terminal client est complexe et l'atténuation du signal par un coupleur 1xN est non négligeable. De plus, le fait que l'information est extraite au niveau de chaque terminal client présente un souci de sécurité.
Les PONs WDM, quant à eux, utilisent une répartition des ressources en longueurs d'onde. Autrement dit, à chaque client est alloué une longueur d'onde spécifique. En effet, une longueur d'onde est affectée à chaque abonné au niveau du central de transmission. Chaque longueur d'onde est ensuite filtrée au niveau d'un démultiplexeur optique et est envoyée vers l'abonné correspondant. Ce type de réseau nécessite donc l'utilisation d'un multiplex de longueurs d'onde, en quantité égale au nombre d'abonnés, et d'un démultiplexeur.
Ainsi, le réseau de type PON WDM a l'avantage, par rapport au réseau PON classique, de la simplicité, chaque longueur d'onde étant affectée à un abonné spécifique, et de la performance, un démultiplexeur optique étant nettement moins atténuant qu'un coupleur 1xN.
En revanche, il est plus coûteux car il utilise un plus grand nombre de longueurs d'onde et un élément de routage (démultiplexeur optique) plus onéreux que le simple coupleur 1xN.
Il est aussi connu un central comportant un laser accordable émettant, par commutation, une pluralité de longueurs d'ondes différentes. Ainsi, il adresse les clients l'un après l'autre en accordant sa longueur d'onde. Cependant, le laser accordable doit fonctionner à un débit N fois supérieur à celui alloué aux clients, et il faut ajouter un temps de commutation qui, dans le meilleur des cas, est de 50 ns qui est loin d'être négligeable dans des communications à très haut débit.
Les documents HATAMI-HANZA H ET AL: "A MULTILEVEL SOLITON COMMUNICATION SYSTEM", JOURNAL OF LIGHTWAVE TECHNOLOGY, IEEE SERVICE CENTER, NEW YORK, NY, US, vol. 15, no. 1, janvier 1997, pages 6-18, XP000642273, ISSN: 0733-8724 et US 2003/231885 A1 (KATO MASAO ET AL) 18 décembre 2003 décrivent des procédés d'émission de données multiplexées en amplitudes et en temps, suivie d'une conversion en un signal multiplexé en longueurs d'ondes.
Le document JUNG D K ET AL: "Spectrum-sliced bidirectional passive optical network for simultaneous transmission of WDM and digital broadcast video signals", ELECTRONICS LETTERS, IEE STEVENAGE, GB, vol. 37, no. 5, 1 mars 2001, pages 308-309, XP006016334, ISSN: 0013-5194 montre un WDM PON bidirectionnel.
Le document KATO M ET AL: "Single-channel 800 Gbit/s asynchronous all-optical amplitude-division demultiplexing based on polarization-independent Ghz Raman soliton in fiber", POSTDEADLINE PAPERS. SUMMARIES OF PAPERS PRESENTED AT THE CONFERENCE ON LASERS AND ELECTRO-OPTICS. CONFERENCE EDITION (IEEE CAT. NO.02CH37337), OPT. SOC. AMERICA WASHINGTON, DC, USA, vol. 2, 2002, pages CPDB4-1, XP009055596, ISBN: 1-55752-705-9 divulgue un convertisseur TDM-WDM.

Objet et résumé de l'invention

L'invention a pour but de remédier à ces inconvénients, et de simplifier la transmission optique entre une

2

première unité et une pluralité de secondes unités.

Ces buts sont atteints grâce à un procédé de transmission optique entre une première unité et une pluralité de secondes unités, lesdites première et secondes unités étant connectées entre elles au moyen d'un réseau d'accès optique passif, et en ce que ladite première unité envoie des données portées par un signal lumineux ayant une longueur d'onde unique et qui sont reçues par ladite pluralité de secondes unités selon une pluralité de signaux lumineux ayant une pluralité de longueurs d'ondes différentes de sorte que chacune desdites secondes unités reçoit les données qui lui sont associées selon au moins une longueur d'onde spécifique.

Ainsi, on peut générer la pluralité de signaux avec un seul émetteur au niveau de la première unité émettant un signal ayant une longueur d'onde unique tout en utilisant une répartition de ressources en longueurs d'onde, en allouant au moins une longueur d'onde spécifique à chaque seconde unité. Ceci permet de diminuer les coûts (par rapport à un PON WDM classique) tout en augmentant la performance, la sécurité et la simplicité de réseau optique PON.

Selon une particularité de la présente invention, le signal lumineux envoyé par ladite première unité est un signal lumineux multiplexé en amplitude comportant une pluralité d'amplitudes de sorte qu'au moins une amplitude déterminée est attribuée à chacune desdites secondes unités.

Ainsi, le signal lumineux multiplexé en amplitude permet d'attribuer de manière simple et instantanée, à chaque seconde unité une amplitude bien déterminée des impulsions de ce signal portant les données.

Avantageusement, la longueur d'onde unique dudit signal lumineux envoyé par ladite première unité est transformée par un effet non linéaire de décalage spectral en une pluralité de longueurs d'onde selon ladite pluralité d'amplitudes formant ainsi un signal lumineux multiplexé par division de longueurs d'onde.

Grâce à la conversion d'un multiplexage temporel en un multiplexage par longueur d'onde, on réalise une répartition spatiale des longueurs d'onde afin que chaque seconde unité ne reçoive que la longueur d'onde qui lui est associée. Ceci permet d'augmenter la sécurité des données tout en simplifiant la réception de ces données par les secondes unités.

L'invention vise aussi un système de transmission optique entre une première unité et une pluralité de secondes unités, lesdites première et secondes unités étant connectées entre elles au moyen d'un réseau optique passif, et en ce que ladite première unité comporte un émetteur destiné à envoyer des données portées par un signal lumineux ayant une longueur d'onde unique et en ce que ladite pluralité de secondes unités comporte une pluralité de récepteurs destinés à recevoir les données selon une pluralité de signaux lumineux ayant une pluralité de longueurs d'ondes différentes de sorte que chacune desdites secondes unités est destinée à recevoir les données qui lui sont associées selon au moins une longueur d'onde spécifique.

Ainsi, l'architecture du système est très simple à réaliser, car la première unité ne comporte qu'un seul émetteur pour émettre un signal ayant une longueur d'onde unique. De plus, le système présente une sécurité optimale et une bonne performance car il permet d'associer au moins une longueur d'onde spécifique à chaque seconde unité.

Selon une particularité de la présente invention, le signal lumineux envoyé par l'émetteur de ladite première unité est un signal lumineux multiplexé en amplitude comportant une pluralité d'amplitudes de sorte qu'au moins une amplitude déterminée est attribuée à chacune desdites secondes unités.

Ainsi, le multiplexage en amplitude d'un signal lumineux permet de faire une correspondance simple et instantanée entre les différentes amplitudes et la pluralité de secondes unités.

Avantageusement, le système comporte un moyen non linéaire destiné à transformer par décalage spectral, la longueur d'onde unique dudit signal lumineux envoyé par ladite première unité en une pluralité de longueurs d'onde selon ladite pluralité d'amplitudes formant ainsi un signal lumineux multiplexé par division de longueurs d'onde.

Ainsi, le moyen non linéaire permet de réaliser une conversion d'un multiplexage temporel en un multiplexage par longueur d'onde, permettant d'associer au moins une longueur d'onde spécifique à chaque seconde unité. Ceci permet d'augmenter la sécurité tout en simplifiant l'architecture du système.

Selon une autre particularité de la présente invention,le système comporte un démultiplexeur disposé en aval dudit moyen non linéaire destiné à démultiplexer ledit signal lumineux multiplexé par division de longueurs d'onde en ladite pluralité de signaux lumineux pour les envoyer vers ladite pluralité de secondes unités.

Ainsi, le démultiplexeur permet d'allouer à chaque seconde unité un signal non atténué et ayant une longueur d'onde spécifique. En effet, un démultiplexeur disposé en aval du moyen non linéaire permet au moyen non linéaire de décaler la longueur d'onde de manière proportionnelle à la puissance des données destinées à chaque seconde unité.

Le système, selon l'invention, comprend un terminal central comprenant la première unité et une pluralité de terminaux clients comprenant chacun une seconde unité de ladite pluralité de secondes unités.

Ainsi, le terminal central ne comporte qu'un seul émetteur pour émettre un signal ayant une longueur d'onde unique tout en allouant une longueur d'onde spécifique à chaque terminal client.

L'invention vise également un terminal central de transmission optique comportant un émetteur destiné à envoyer des données portées par un signal lumineux multiplexé en amplitude et ayant une longueur d'onde unique, et un moyen non linéaire destiné à transformer par décalage spectral ledit signal lumineux multiplexé en amplitude en un signal lumineux multiplexé par division de longueurs d'onde.

Ainsi, l'architecture de l'équipement est très simple, car il suffit d'un seul émetteur pour émettre un signal lumineux ayant une longueur d'onde unique et d'un moyen linéaire pour permettre une répartition spatiale des longueurs d'ondes.

Selon un premier mode de réalisation, le terminal central comporte un démultiplexeur de réception, une pluralité de récepteurs chacun relié audit démultiplexeur de réception, et un circulateur disposé entre le moyen non linéaire et ledit démultiplexeur de réception.

Ainsi, le circulateur permet de router les signaux lumineux émis et reçus par le terminal central de manière adéquate.

Selon un deuxième mode de réalisation, le terminal central comporte un autre moyen non linéaire, un récepteur connecté audit autre moyen non linéaire, et un circulateur disposé entre ledit moyen non linéaire et ledit autre moyen non linéaire.

Ce deuxième mode de réalisation présente l'avantage de n'avoir qu'un seul récepteur au niveau du terminal central.

Selon un troisième mode de réalisation, le terminal central comporte un récepteur, et un circulateur disposé entre l'émetteur et le moyen non linéaire et est connecté audit récepteur.

Ce troisième mode de réalisation présente l'avantage de n'avoir qu'un seul moyen non linéaire et qu'un seul récepteur au niveau du terminal central.

L'invention vise aussi un terminal client de transmission optique, comportant un récepteur/émetteur destiné à recevoir ou émettre des données portés par un signal lumineux ayant une longueur d'onde spécifique depuis ou vers un terminal central comportant les caractéristiques ci-dessus.

Ainsi, le terminal client présente une grande sécurité et une grande simplicité car il n'est pas nécessaire d'avoir un moyen spécifique pour extraire les données qui lui sont destinées.

Brève description des dessins

D'autres particularités et avantages de l'invention ressortiront à la lecture de la description faite, ci-après, à titre indicatif mais non limitatif, en référence aux dessins annexés, sur lesquels :

- la figure 1 illustre un exemple très schématique d'un système de transmission optique entre une première unité et une pluralité de secondes unités, connectées entre elles au moyen d'un réseau optique passif ;
- la figure 2 montre un mode de réalisation du système de transmission optique de la figure 1 ;
- la figure 3 montre un exemple selon l'invention d'un système de transmission optique de la figure 1, entre un terminal central et une pluralité de terminaux clients ; et
- les figures 4 à 6 montrent plusieurs modes de réalisation du terminal central de la figure 3.

Description détaillée de modes de réalisation

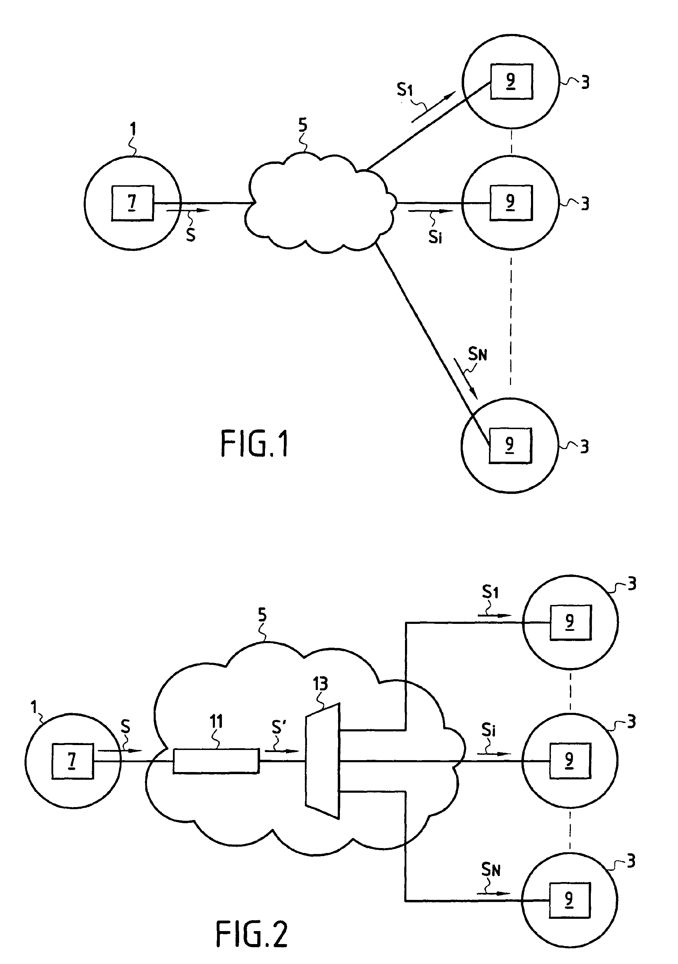

Conformément à l'invention, la figure 1 illustre un exemple très schématique d'un système de transmission optique entre une première unité 1 et une pluralité de secondes unités 3. Les première et secondes unités sont connectées entre elles au moyen d'un réseau optique passif 5 (PON).

La première unité 1 comporte un émetteur 7 destiné à envoyer des données portées par un signal lumineux S ayant une longueur d'onde unique à la pluralité de secondes unités 3. En effet, la pluralité de secondes unités 3 comporte une pluralité de récepteurs 9 destinés à recevoir les données selon une pluralité de signaux lumineux $S_1$,..., $S_N$ ayant une pluralité de longueurs d'ondes différentes. On notera que selon cet exemple, N désigne un nombre supérieur ou égal à celui de la pluralité de secondes unités 3, de sorte que chacune de ces secondes unités 3 est destinée à recevoir les données qui lui sont associées selon au moins une longueur d'onde spécifique.

Ainsi, avec une architecture optimale, une longueur d'onde unique est envoyée au niveau de la première unité 1 tout en allouant au moins une longueur d'onde spécifique à chaque seconde unité 3.

En outre, le signal lumineux S envoyé par l'émetteur 7 de la première unité 1 est un signal lumineux multiplexé en amplitude comportant une pluralité d'amplitudes de sorte qu'au moins une amplitude déterminée est attribuée à chacune desdites secondes unités 3.

Ainsi, le multiplexage en amplitude du signal lumineux S permet d'attribuer de manière instantanée, à chaque seconde unité 3 une amplitude bien déterminée des impulsions de ce signal S portant les données. Les données destinées à chaque second noeud 3 sont multiplexées temporellement mais chaque trame de données est émise avec une puissance (amplitude) différente.

La figure 2 montre que le réseau optique passif 5 du système de transmission optique comporte un moyen non linéaire 11 destiné à transformer le multiplexage en amplitude en un multiplexage en longueur d'onde.

Ce moyen non linéaire 11 transforme par décalage spectral, la longueur d'onde unique du signal lumineux S envoyé par la première unité 1 en une pluralité de longueurs d'onde en fonction de la pluralité d'amplitudes. Chaque trame change de longueur d'onde avec une variation vers les longueurs d'onde plus grandes qui dépend de la puissance optique de la trame. Ainsi, on forme à la sortie du moyen non linéaire 11, un signal lumineux S' multiplexé par division de longueurs d'onde (WDM).

La conversion d'un multiplexage temporel (TDM) en un multiplexage par longueur d'onde (WDM) permet de réaliser une répartition spatiale des longueurs d'onde afin que chaque seconde unité ne reçoive que la longueur d'onde qui lui est associée.

En effet, le système de transmission optique comporte un démultiplexeur optique 13 à faible perte disposé en aval du moyen non linéaire 11. Ce démultiplexeur 13 est destiné à démultiplexer le signal lumineux S' multiplexé par division de longueurs d'onde en la pluralité de signaux lumineux $S_1,...,S_N$ pour les envoyer vers la pluralité de secondes unités 3.

Ainsi, le démultiplexeur 13 permet d'allouer à chaque seconde unité 3 un signal faiblement atténué (pertes indépendantes du nombre de canaux) et ayant une longueur d'onde spécifique. En effet, un démultiplexeur 13 disposé en aval du moyen non linéaire 11 permet à ce moyen non linéaire 11 de décaler la longueur d'onde de manière proportionnelle à la puissance des données destinées à chaque seconde unité 3. Par conséquent, chaque seconde unité 3 ne reçoit que la longueur d'onde qui lui est associée, ce qui augmente la sécurité des données et rend le système de réception très léger.

En effet, comme les données multiplexées temporellement sont également multiplexées en amplitude (une amplitude donnée correspondant à une seconde unité 3 bien déterminé), le moyen non linéaire 11, placé juste devant le démultiplexeur 13 optique (par rapport au sens du flux ou signal S), décale la longueur d'onde du signal S proportionnellement à l'amplitude des impulsions composant celui-ci. Ainsi, en aval du moyen non linéaire 11, juste avant le démultiplexeur optique 13, les données multiplexées en amplitude le sont également en longueur d'onde.

Bien entendu, il faut prendre soin qu'en passant au travers du moyen non linéaire 11, le décalage spectral engendré corresponde bien à la grille spectrale du démultiplexeur optique 13.

Par ailleurs, l'effet non linéaire de décalage spectral réalisé par le moyen non linéaire 11 peut être du type "soliton à auto décalage fréquentiel" (soliton self frequency shift) ou du type "auto modulation de phase", ou d'un tout autre type aboutissant à un même effet de décalage spectral.

Le phénomène de "soliton à auto décalage fréquentiel" (soliton self frequency shift) est un phénomène physique mis en lumière par Mollenauer et Mitschke dans une publication intitulée "Discovery of the soliton self-frequency shift", (Optics Letters, Vol. 11, No.10, pp 659-661, Octobre 1986).

En effet, dans une fibre optique, une impulsion (par exemple S) de type soliton (de profil sécante hyperbolique) d'énergie supérieure à celle du soliton fondamental subit une compression non linéaire. Lorsque le taux de compression est suffisamment grand, une impulsion de forte puissance crête est générée. La compression temporelle induit un fort élargissement spectral, qui va permettre à une diffusion Raman d'agir sur l'impulsion. Ainsi, le spectre de l'impulsion subit par effet Raman un décalage fréquentiel, proportionnel aux niveaux de non linéarités du moyen non linéaire 11. Le décalage spectral engendré par le "soliton self frequency shift" du moyen non linéaire 11 est proportionnel à la puissance crête de l'impulsion créée, ou inversement proportionnel à sa largeur temporelle. Plus la puissance crête est grande, autrement dit plus le taux de compression est élevé, plus le décalage fréquentiel est grand. Des impulsions initiales, dont les puissances crêtes sont différentes, vont donc donner naissance, à des impulsions de longueurs d'onde différentes, par compression non linéaire puis par "soliton self frequency shift".

A titre d'exemple, considérons un flux de données ou signal S à 40 Gbit/s, émis au niveau de la première unité 1, avec des impulsions $\tau$ d'environ 8 ps et de largeur temporelle (rapport de cycle) d'environ 33 % et ayant une longueur d'onde $\lambda$ égale à 1550 nm.

Par ailleurs, considérons un moyen non linéaire 11 constitué d'un élément en fibre à verre chalcogénure d'indice non linéaire $n_2$ égal à $2.10^{-18}$ m²/W et de surface effective $A_{eff}$ égale à 50 $\mu$m². On notera que l'indice non linéaire $n_2$ de la fibre à verre chalcogénure est beaucoup plus élevée que celui d'une fibre à verre standard. Par ailleurs, on peut choisir pour cette fibre à verre un niveau de dispersion chromatique D égal à 10 ps/nm/km.

En tenant compte de la vitesse de la lumière dans le vide c, la longueur de dispersion $Z_D$ du soliton est donnée par la relation suivante:

$$Z_D = \frac{2\pi c . \tau^2}{1.763^2 \lambda^2 D} \qquad (1)$$

Alors, selon les données ci-dessus, la longueur de dispersion $Z_D$ est égale à 1.6155 km. Par ailleurs, la période soliton $Z_0$ est donnée par:

$$Z_0 = \frac{\pi Z_D}{2} \qquad (2)$$

soit, selon cet exemple, la période soliton $Z_0$ est égale à 2.5377 km. La puissance crête $P_0$ du soliton fondamental vaut alors:

$$P_0 = \frac{0.776 \, \lambda^3 \, A_{eff} \, D}{\pi^2 c \, n_2 \tau^2} \qquad (3)$$

soit, selon cet exemple, la puissance crête $P_0$ vaut 3.8124 mW. La puissance moyenne du train d'impulsions correspondant est alors égale à -1.5991 dBm.

En outre, la longueur de dispersion $L_D$ et la longueur non linéaire $L_{NL}$ correspondant à la propagation d'une impulsion de largeur 8 ps et de puissance crête $P_C$ dans la fibre non linéaire à verre chalcogénure (moyen non linéaire 11) sont données par les relations suivantes:

$$L_D = \frac{2\pi c . \tau^2}{\lambda^2 D} \qquad L_{NL} = \frac{\lambda \, A_{eff}}{2\pi n_2 P_C} \qquad (4)$$

On notera que les impulsions peuvent être considérées comme très proches de solitons d'ordre N si leur puissance crête $P_c$ obéit à la relation:

$$N^2 = \frac{L_D}{L_{NL}} = \frac{4\pi^2 n_2 c \, \tau^2 P_C}{\lambda^3 D \, A_{eff}} \qquad \Rightarrow \qquad P_C = \frac{\lambda^3 D \, A_{eff} N^2}{4\pi^2 n_2 c \, \tau^2} \qquad (5)$$

A titre d'exemple, pour un ordre N=2, la puissance crête $P_c$ correspondante vaut alors 4,9 mW.

$$N = 2 \qquad \Rightarrow \qquad P_C = 4.9 \, mW \qquad (6)$$

En injectant maintenant ces impulsions avec les puissances crêtes calculées ci-dessus dans le moyen non linéaire 11, le taux de compression $F_C$ de ces impulsions est alors donné par la relation :

$$F_C = 4.1 N \qquad (7)$$

La longueur de fibre $L_{opt}$ nécessaire pour obtenir cette compression vaut alors:

$$L_{opt} = \frac{0.32}{N} + \frac{1.1}{N^2} \qquad (8)$$

soit pour N=2:

$$N = 2 \quad \Rightarrow \quad F_C = 8.2 \quad et \quad L_{opt} = 1100\,m \qquad (9)$$

Le facteur de compression est donc d'environ 8 (la largeur des impulsions après compression est égale à 1 ps) et la longueur de fibre à verre chalcogénure nécessaire pour obtenir cette compression est égale à 1100 m.

Après cette phase de compression non linéaire des impulsions, intervient alors, le décalage spectral des impulsions par l'effet de "soliton self frequency shift". Le décalage spectral par unité de longueur généré par le "soliton self frequency shift", est donné par J.P. Gordon, dans un document intitulé "Theory of the soliton self-frequency shift", (Optics Letters, Vol.11, No. 10, pp. 662-664, Octobre 1986) selon la formule suivante:

$$\frac{d\omega_0}{dz} = \frac{\pi}{8} \int_0^\infty \frac{\Omega^3\,\alpha_R(\Omega)}{\sinh^2\left(\dfrac{\pi\Omega}{2}\right)} d\Omega \qquad (10)$$

où $\omega_0$ est la fréquence normalisée du soliton, $\alpha_R$ est le coefficient d'atténuation Raman de la fibre utilisée, $\Omega$ est la déviation spectrale en unités soliton. Celui-ci est relié au gain Raman $g_R$ de la fibre par la relation suivante:

$$\alpha_R(\Omega) = \frac{\lambda}{2\pi n_2} g_R(v) \quad avec \quad v = \frac{1.763\,\Omega}{2\pi\tau} \qquad (11)$$

où $v$ est le décalage fréquentiel en terahertz (THz).

Il est connu qu'une fibre à verre chalcogénure (moyen non linéaire 11) a une efficacité Raman d'environ 700 fois supérieure à celle d'une fibre à verre de silice. La valeur pic du gain Raman $g_R$ d'une fibre silice étant de $1.10^{-13}$ m/W, celle d'une fibre à verre chalcogénure est alors de l'ordre de $7.10^{-11}$ m/W. Au pic, le coefficient d'atténuation Raman $\alpha_R$ peut donc s'écrire comme:

$$\alpha_R^{Max} = \frac{\lambda}{2\pi n_2} 7.10^{-11} \qquad (12)$$

soit, en valeur numérique:

$$\alpha_R^{Max} = 8.634 \qquad (13)$$

La relation (4) devient alors, lorsqu'on repasse en unité réelle:

$$\frac{dv_0}{dz} = \frac{1.763^3}{\pi z_c \tau^3} \frac{d\omega_0}{dz} = \frac{1.763^3\,\lambda^2 D}{16\pi c\tau^3} \int_0^\infty \frac{\Omega^3\,\alpha_R(\Omega)}{\sinh^2\left(\dfrac{\pi\Omega}{2}\right)} d\Omega \qquad (14)$$

Comme:

$$\alpha_R\left(\Omega\right) = 8.634 \cdot \left(\frac{\Omega}{\Delta v_{Max}}\right) \tag{15}$$

On fait l'hypothèse que le pic de gain Raman se trouve à une fréquence $\Delta v_{Max}$ égale à 13.2 THz de la pompe. La relation (8) peut alors s'écrire comme:

$$\frac{dv_0}{dz} = \frac{1.763^4 \, \lambda^2 D}{16\pi c \tau^4} \frac{8.634}{2\pi \, \Delta v_{Max}} \int_0^\infty \frac{\Omega^4}{\sinh^2\left(\frac{\pi \Omega}{2}\right)} d\Omega \tag{16}$$

Comme:

$$\int_0^\infty \frac{\Omega^4}{\sinh^2\left(\frac{\pi \Omega}{2}\right)} d\Omega = \frac{16}{15\pi} \tag{17}$$

La relation (10) devient alors:

$$\frac{dv_0}{dz} = \frac{1.763^4 \, \lambda^2 D}{30 \, \pi^3 c} \frac{8.634}{\Delta v_{Max}} \frac{1}{\tau^4} \tag{18}$$

En exprimant la longueur d'onde $\lambda$ en nm, la dispersion chromatique D en ps/(nm.km), la vitesse de la lumière c en *m/s,* $\Delta v_{Max}$ en THz, et $\tau$ en ps, l'expression (12) devient:

$$\frac{dv_0}{dz}(THz\,/\,km) = \frac{1.763^4 \, \lambda^2 D}{30 \, \pi^3 c} \frac{8.634}{\Delta v_{Max}} \frac{1}{\tau^4} \cdot 10^3 = \frac{0.764}{\tau^4} \tag{19}$$

Pour des impulsions $\tau$ compressées de 1 ps (mais émise au niveau de la première unité 1 avec une largeur de 8 ps), on obtient un décalage (shift) de 0.76 THz (environ 6 nm) par kilomètre de fibre. Au bout de 6 km de fibre au total (dans lesquels sont inclus les 1100 m nécessaires à la compression), on aura un décalage de 3.8 THz (soit environ 30 nm).

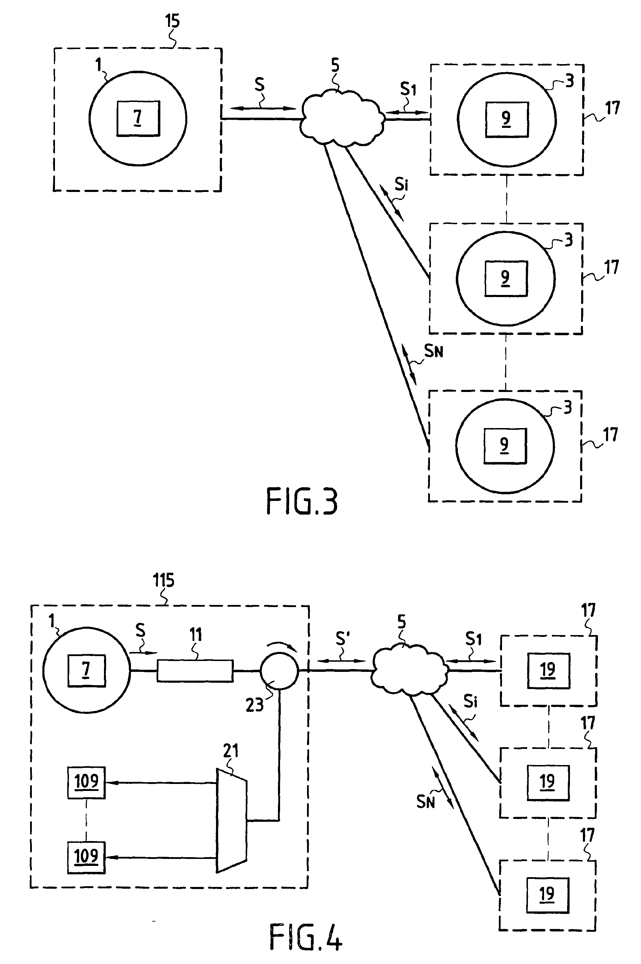

A titre d'exemple, la figure 3 montre un système de transmission optique comprenant un terminal central 15 comprenant la première unité 1 et une pluralité de terminaux clients (ou abonnés) 17 comprenant chacun une seconde unité 3.

Par ailleurs, on notera qu'une ou plusieurs secondes unités 3 peuvent être comprises dans un terminal central 15 et qu'une première unité 1 peut être comprise dans un terminal client 17.

Considérant le cas où le système au réseau PON de la figure 3 comporte 40 terminaux clients (ou abonnés) 17 et que le débit par terminal client 17 est de 1 Gbit/s, alors en considérant 40 valeurs de puissance (crête) de trame réparties entre 3.8 et 4.9 mW, il est possible de répartir les 40 longueurs d'onde descendantes (à destination des 40 terminaux clients 17) sur 30 nm de bande, soit 1 longueur d'onde tous les 100 GHz environ.

On notera que, la photodétection d'impulsions de 1 ps ne pose pas de problème particulier dans la mesure où le débit véhiculé après le démultiplexeur optique 13 est seulement de 1 Gbit/s. Un détecteur ultrarapide n'est donc pas nécessaire car le but ici n'est pas de réussir à résoudre l'impulsion mais bien de distinguer un "1" d'un "0".

Par ailleurs, une diaphonie (crosstalk) entre canaux WDM n'est notable que si le "self soliton frequency shift" ne s'est pas suffisamment accumulé (autrement dit si la longueur de fibre non linéaire est trop faible).

Cependant, une propagation sans amplification des impulsions dans de la fibre standard (longueur de dispersion égale à 14 m si les impulsions ont une largeur de 1 ps à l'entrée dans la fibre) sur quelques centaines de mètres a pour effet l'élargissement des impulsions (en déstabilisant la propagation "soliton") et la compression du spectre, de sorte qu'au niveau du démultiplexeur 13, aucune diaphonie (crosstalk) ou interférence notable n'est observée.

L'exemple numérique ci-dessus montre l'efficacité du "self soliton frequency shift" à démultiplexer spectralement un flux de données à 40 Gbit/s, avec des ordres de grandeur tout à fait raisonnables pour les différents paramètres du démultiplexeur 13.

Ainsi, l'invention concilie les avantages des deux types d'architecture de réseau PON. Autrement dit, au niveau du terminal central 15, une longueur d'onde unique est envoyée, tandis qu'un démultiplexeur optique à faible perte est implémenté dans le réseau de sorte qu'à chaque abonné est associée une longueur d'onde, qui lui est bien spécifique.

Les figures 4 à 6 montrent plusieurs modes de réalisation du terminal central de la figure 3.

Selon ces modes de réalisations le terminal central 115, 215, 315 de transmission optique comporte un émetteur 7 destiné à envoyer des données portées par un signal lumineux S multiplexé en amplitude et ayant une longueur d'onde unique, et un moyen non linéaire 11 destiné à transformer par décalage spectral le signal lumineux S multiplexé en amplitude en un signal lumineux S' multiplexé par division de longueurs d'onde.

Ainsi, l'architecture de l'équipement est très simple, car il suffit d'un seul émetteur 7 pour émettre un signal lumineux ayant une longueur d'onde unique et d'un moyen linéaire 11 pour permettre une répartition spatiale des longueurs d'ondes.

En outre, le terminal client 17 de transmission optique, comporte un récepteur/émetteur 19 destiné à recevoir ou émettre des données portés par un signal lumineux $S_i$ ayant une longueur d'onde spécifique depuis ou vers le terminal central 115, 215, 315 de transmission optique. Ainsi, chaque terminal client 17 présente une grande sécurité et une grande simplicité car il n'est pas nécessaire d'avoir un moyen spécifique pour extraire les données qui lui sont destinées.

La figure 4 montre un premier mode de réalisation, où le terminal central 115 comporte un démultiplexeur de réception 21, une pluralité de récepteurs 109 reliés au démultiplexeur de réception 21, et un circulateur 23. Le circulateur 23 est disposé entre le moyen non linéaire 11 et le démultiplexeur de réception 19. Ainsi, le circulateur 21 permet de router les signaux lumineux émis et reçus S' par le terminal central 115 de manière adéquate.

La conversion TDM-WDM de l'exemple de la figure 4 concerne les signaux lumineux dans le sens descendant (à destination des terminaux clients 17). Pour les données qui remontent vers le terminal central 115 (depuis les terminaux clients 17), le réseau peut être un réseau PON WDM classique avec un multiplexage-démultiplexage en longueurs d'onde. Le circulateur 21, placé entre le moyen non linéaire 11 et le démultiplexeur optique de réception 19, permet de router les trafics descendant et montant de manière adéquate.

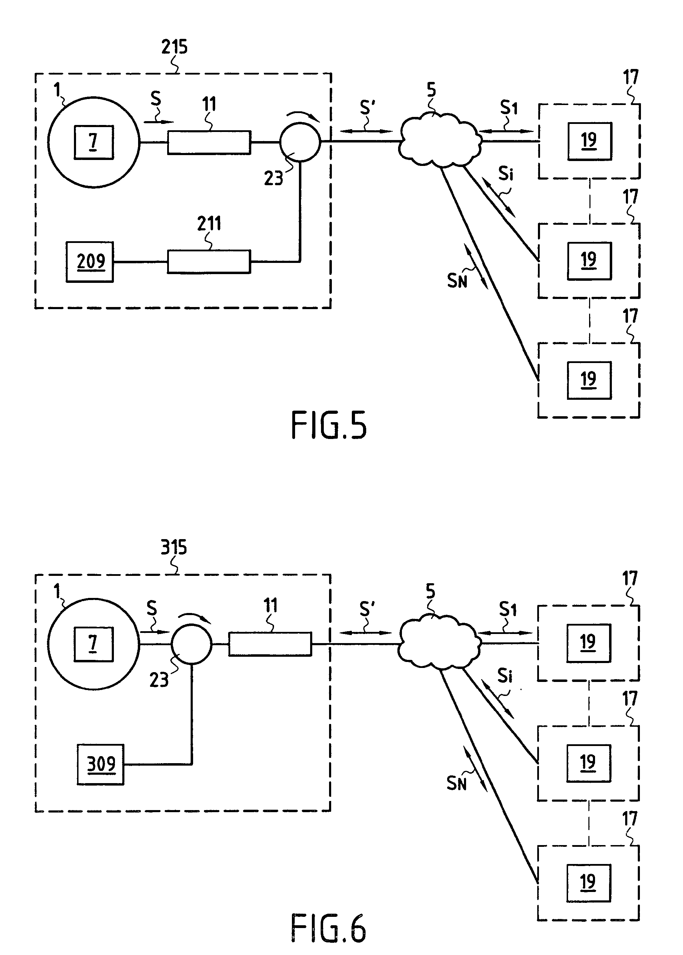

La figure 5 montre un deuxième mode de réalisation, où le terminal central 215 comporte un autre moyen non linéaire 211, un récepteur 209 connecté à cet autre moyen non linéaire 211, et un circulateur 23 disposé entre le moyen non linéaire 11 et l'autre moyen non linéaire 211.

Le deuxième moyen non linéaire 211 sur le flux remontant permet de n'utiliser qu'un récepteur 209 au niveau du terminal central 215. Ce deuxième moyen non linéaire 211 recale les différents canaux sur une longueur d'onde unique, dont la valeur est prise légèrement supérieure à celle du canal remontant de plus haute longueur d'onde. Naturellement, au niveau de chaque terminal client 17, il est nécessaire d'émettre des trames de puissances telles que les longueurs d'onde puissent se recaler de manière satisfaisante en fréquence. L'avantage de ce deuxième mode est de n'avoir qu'un seul récepteur 209 au niveau du terminal central 215 à condition d'effectuer une synchronisation fine à l'émission des signaux montants pour que ces signaux s'intercalent correctement au niveau temporel.

La figure 6 montre un troisième mode de réalisation, où le terminal central 315 comporte un récepteur 309, et un circulateur 23 connecté au récepteur 309. Dans ce cas, le circulateur 23 est disposé entre l'émetteur 7 et le moyen non linéaire 11.

Ainsi, selon ce troisième mode de réalisation, on n'utilise plus qu'un seul moyen non linéaire 11, qui va donc agir à la fois sur les flux descendant et montant. Au niveau du terminal central 315 (pour le flux descendant), et des terminaux clients 17 (pour les flux remontants), il est nécessaire de réaliser le multiplexage en puissance des différentes trames de manière précise, afin que les décalages spectraux générés correspondent bien à la grille du démultiplexeur 13 (pour le flux montant), et à la longueur d'onde unique de transport (pour les flux descendants). La synchronisation temporelle, au niveau des terminaux clients 17, des trames remontantes est également nécessaire.

Avec les modes de réalisations des figures 4 à 6, on peut aussi utiliser le fait que les puissances de trames sont différentes pour connecter des clients situés à des distances différentes. Les clients proches du terminal central 115, 215, 315 vont être associés à des longueurs d'onde issues des trames de puissance faible (basses longueurs d'onde). Les clients plus éloignés vont être connectés grâce aux longueurs d'onde issues des trames de forte puissance (haute longueur d'onde). Tout ceci peut-être géré au niveau du terminal central 115, 215, 315 pour le flux descendant, et au niveau des terminaux clients 17 pour les flux remontants.

**Revendications**

1. Procédé de transmission optique assurant la transmission d'un trafic de données descendant et montant entre un terminal central (115; 215; 315) et une pluralité de terminaux clients (17) étant connectés entre eux au moyen d'un réseau d'accès optique passif (5), **caractérisé en ce que** ledit procédé comprend les étapes suivantes :

   - une émission, par ledit terminal central, de données portées par un signal lumineux (S) multiplexé en amplitude comportant une pluralité d'amplitudes et ayant une longueur d'onde unique vers ladite pluralité de terminaux clients (17) ;
   - une transformation par décalage spectral, par ledit terminal central (115; 215; 315), de la longueur d'onde unique dudit signal lumineux (S) envoyé par ledit terminal central (115, 215, 315) en une pluralité de longueurs d'ondes, selon ladite pluralité d'amplitudes formant ainsi un signal lumineux (S') multiplexé par division de longueurs d'onde, de sorte que lesdites données sont reçues par ladite pluralité de terminaux clients (17) selon une pluralité de signaux lumineux ($S_1,...,S_N$) ayant une pluralité de longueurs d'ondes différentes, chacun desdits terminaux clients (17) recevant les données qui lui sont associées selon au moins une longueur d'onde spécifique ; et
   - un routage dudit trafic descendant et montant entre ledit terminal central (115, 215, 315) et ladite pluralité de terminaux clients (17).

2. Procédé selon la revendication 1, **caractérisé en ce que** ladite transformation par décalage spectral est réalisée par un effet non linéaire du type soliton à auto-décalage fréquentiel.

3. Terminal central de transmission optique (115; 215; 315) apte à assurer un trafic descendant et montant avec une pluralité de terminaux clients (17) connectés au terminal central au moyen d'un réseau d'accès optique passif (5), ledit terminal central (115; 215; 315) étant **caractérisé en ce qu'**il comprend :

   - un émetteur (7) destiné à envoyer par l'intermédiaire d'un réseau optique passif (5), vers ladite pluralité de terminaux clients (17), des données portées par un signal lumineux (S) multiplexé en amplitude comportant une pluralité d'amplitudes et ayant une longueur d'onde unique ;
   - au moins un moyen non linéaire (11), destiné à transformer par décalage spectral la longueur d'onde unique dudit signal lumineux (S) en une pluralité de longueurs d'ondes selon ladite pluralité d'amplitudes formant ainsi un signal lumineux (S') multiplexé par division de longueurs d'ondes, de sorte que lesdites données sont reçues par ladite pluralité de terminaux clients (17) selon une pluralité de signaux lumineux ($S_1,...,S_N$) ayant une pluralité de longueurs d'ondes différentes ; et
   - un circulateur (23) permettant de router ledit trafic descendant et montant entre ledit terminal central (115, 215, 315) et ladite pluralité de terminaux clients (17).

4. Terminal selon la revendication 3, **caractérisé en ce que** ledit au moins un moyen non linéaire (11) est apte à transformer ledit signal lumineux (S) de longueur d'onde unique multiplexé en amplitude en ledit signal lumineux (S') multiplexé par division de longueurs d'ondes, par un effet non linéaire du type soliton à auto-décalage fréquentiel.

5. Terminal selon l'une quelconque des revendications 3 et 4, **caractérisé en ce qu'**il comporte un démultiplexeur de réception (21) et une pluralité de récepteurs (109) et que ledit circulateur (23) est disposé entre ledit au moins un moyen non linéaire (11) et le démultiplexeur de réception (21), ledit démultiplexeur de réception (21) étant relié à la pluralité de récepteurs (109).

6. Terminal selon l'une quelconque des revendications 3 et 4, **caractérisé en ce qu'**il comporte deux moyens non linéaires (11, 211), et un récepteur (209) , le premier moyen non linéaire (11) étant situé entre ledit émetteur (7) et ledit circulateur (23), le second moyen non linéaire (211) étant situé entre ledit circulateur (23) et le récepteur (209).

7. Terminal selon l'une quelconque des revendications 3 et 4, **caractérisé en ce qu'**il comporte un récepteur (309) et que ledit circulateur (23) est disposé entre l'émetteur (7) et ledit au moins un moyen non linéaire (11) et **en ce que** ledit circulateur (23) est connecté au récepteur (309).

**Claims**

1. Optical transmission method transmitting data traffic down and up between a central terminal (115; 215; 315) and a plurality of client terminals (17) being connected together by means of a passive optical access network (5), **characterized in that** the said method comprises the following steps:

- a transmission, by the said central terminal, of data carried by an amplitude-multiplexed light signal (s) comprising a plurality of amplitudes and having a single wavelength to the said plurality of client terminal (17) ;
- a spectral shift conversion, by the said central terminal (115; 215; 315), of the single wavelength of the said light signal (S) sent by the said central terminal (115, 215, 315) into a plurality of wavelengths, according to the said plurality of amplitudes thus forming a wavelength-division multiplexes light signal (S'), so that the said data are received by the said plurality of client terminals (17) according to a plurality of light signals ($S_1$...,$S_N$) having a plurality of different wavelengths, each of the said client terminal (17) receiving the data that are associated therewith according to at least one specific wavelength; and
- a routing of the said down and up traffic between the said central terminal (115, 215, 315) and the said plurality of client terminals (17).

2. Method according to Claim 1, **characterized in that** the said spectral shift conversion is carried out by a non-linear effect of the frequency self-shift (soliton type.

3. Optical transmission central terminal (115; 215; 315) capable of providing down and up traffic with a plurality of client terminals (17) connected to the central terminal by means of a passive optical access network (5), the said central Terminal (115 ; 215; 315) being **characterized in that** it comprises:

- a transmitter (7) designed to send buy means of a passive optical network (5), to the said plurality of client terminals (17), data carried by an amplitude-multiplexed light signal (S) comprising a plurality of amplitudes and having a single wavelength;
- at least one non-linear means (11), designed to convert by spectral shift the single wavelength of the said light signal (S) into a plurality of wavelengths according to the said plurality of amplitudes thereby forming a wavelength-division multiplexed light signal (S'), so that the said data are received by the said plurality of client terminals (17) according to a plurality of light signals ($S_1$, ... , $S_N$) having a plurality of different wavelengths ; and
- a circulator (23) making it possible to route the said down and up traffic between the said central terminal (115, 215, 315) and the said plurality of client terminals (17).

4. Terminal according to Claim 3, **characterized in that** the said at least one non-linear means (11) is capable of converting the said amplitude-multiplexes single wavelength light signal (S) into the said wavelength division-multiplexed light signal (S'), by a non-linear effect of the frequency self-shift soliton type.

5. Terminal according to either one of Claims 3 and 4, **characterized in that** it comprises a receive demultiplexer (21) and a plurality of receivers (109) and that the said circulator (23) is placed between the said at least one non-linear means (11) and the receive demultiplexer (21), the said receive demultiplexer (21) being connected to the plurality of receivers (109).

6. Terminal according to either one of Claims 3 and 4, **characterized in that** it comprises two non-linear means (11, 211) and one receiver (209), the first non-linear means (11) being situated between the said transmitter (7) and the said circulator (23), the second non-linear means (211) being situated between the said circulator (23) and the receiver (209).

7. Terminal according to either one of Claims 3 and 4, **characterized in that** it comprises a receiver (309) and **in that** the said circulator (23) is placed between the transmitted (7) and the said at least one non-linear means (11) and **in that** the said circulator (23) is connected to the receiver (309).

**Patentansprüche**

1. Verfahren zur optischen Übertragung, das die Übertragung eines Abwärts- und Aufwärts-Datenverkehrs zwischen einem zentralen Endgerät (115; 215; 315) und mehreren Kunden-Endgeräten (17) gewährleistet, die untereinander mittels eines passiven optischen Zugangsnetzes (5) verbunden sind, **dadurch gekennzeichnet, dass** das Verfahren die folgenden Schnitte aufweist:

- ein Senden vom zentralen Endgerät zu den mehreren Kunden-Endgeräten (17) von Daten, die von einem amplitudenmultiplexierten Lichtsignal (S) getragen werden, das mehrere Amplituden aufweist und eine einzige Wellenlänge hat;

- eine Umwandlung, durch spektrale Verschiebung, durch das zentrale Endgerät (115; 215; 315), der einzigen Wellenlänge des vom zentrale Endgerät (115, 215, 315) gesendeten Lichtsignals (S) in mehrere Wellenlängen gemäß den mehreren Amplituden, wodurch ein wellenlängenmultiplexiertes Lichtsignal (S') geformt wird, so dass die Daten von den mehreren Kunden-Endgeräten (17) gemäß mehreren Lichtsignalen ($S_1$, ..., $S_N$) empfangen werden, die mehrere unterschiedliche Wellenlängen haben, wobei jedes der Kunden - Endgeräte (17) die ihm zugeordneten Daten gemäß mindestens einer spezifischen Wellenlänge empfängt; und

- ein Routen des Abwärts- und Aufwärts-Verkehrs zwischen dem zentralen Endgerät (115, 215, 315) und den mehreren Kunden-Endgeräten (17).

2. Verfahren nach Anspruch 1, **dadurch gekennzeichnet, dass** die Umwandlung durch spektrale Verschiebung durch eine nicht lineare Wirkung vom Typ Soliton mit Frequenz-Selbstverschiebung durchgeführt wird.

3. Zentrales Endgerät zur optischen Übertragung (115; 215; 315), das fähig ist, einen Abwärts- und Aufwärts-Verkehr mit mehreren Kunden-Endgeräten (17) zu gewährleisten, die mit dem zentralen Endgerät mittels eines passiven optischen Zugangsnetzes (5) verbunden sind, wobei das zentrale Endgerät (115; 215; 315) **dadurch gekennzeichnet ist, dass** es aufweist:

- einen Sender (7), der dazu bestimmt ist, über ein passives optisches Netz (5) an die mehreren Kunden-Endgeräte (17) Daten zu senden, die von einem amplitudenmultiplexierenLichtsignal (S getragen werden, das mehrere Amplituden aufweist und eine einzige Wellenlänge hat;

- mindestens ein nichtlineares Mittel (11), das dazu bestimmt ist, durch spektrale Verschiebung die einzige Wellenlänge des Lichtsignals (S) in mehrere Wellenlängen gemäß den mehreren Amplitude umzuwandeln, wodurch ein wellenlängenmultiplexiertes Lichtsignal (S') geformt wird, so dass die Daten von den mehreren Kunden-Endgeräten (17) gemäß mehreren Lichtsignalen ($S_1,...$ , $S_N$) empfangen werden, die mehrere unterschiedliche Wellenlänge haben; und

- einen Zirkulator (23), der es ermöglicht, den Abwärts- und Aufwärts-Verkehr zwischen dem zentralen Endgerät (115, 215, 315) und den mehreren Kunden-Endgeräten (17) zu routen.

4. Endgerät nach Anspruch 3, **dadurch gekennzeichnet, dass** das mindestens eine nichtlineare Mittel (11) fähig ist, das amplitudenmultiplexierte Lichtsignal (S) mit einer einzigen Wellenlänge durch eine nichtlineare Wirkung vom Typ Soliton mit Frequenz-Selbstverschiebung in das wellenlängenmultiplexierte Lichtsignal (S') umzuwandeln.

5. Endgerät nach einem der Ansprüche 3 und 4, **dadurch gekennzeichnet, dass** es einen Empfangs-Demultiplexer (21) und mehrere Empfänger (109) aufweist und dass der Zirkulator (23) zwischen dem mindestens einen nichtlinearen Mittel (11) und dem Empfangs-Demultiplexer (21) angeordnet ist, wobei der Empfangs-Demultiplexer (21) mit den mehreren Empfängern (109) verbunden ist.

6. Endgerät nach einem der Ansprüche 3 und 4, **dadurch gekennzeichnet, dass** es zwei nichtlineare Mittel (11, 211) und einen Empfänger (209) aufweist, wobei das erste nichtlineare Mittel (11) sich zwischen dem Sender (7) und dem Zirkulator (23) befindet, während das zweite nichtlinear Mittel (211) sich zwischen dem Zirkulator (23) und dem Empfänger (209) befindet.

7. Endgerät nach einem der Ansprüche 3 und 4, **dadurch gekennzeichnet, dass** es einen Empfänger (309) aufweist und dass der Zirkulator (23) zwischen dem Sender (7) und dem mindestens einen nichtlinearen Mittel (11) angeordnet ist und dass der Zirkulator (23) mit dem Empfänger (309) verbunden ist.

FIG.1

FIG.2

FIG.3

FIG.4

FIG.5

FIG.6

## RÉFÉRENCES CITÉES DANS LA DESCRIPTION

**Documents brevets cités dans la description**

- US 2003231885 A1, KATO MASAO

**Littérature non-brevet citée dans la description**

- **HATAMI-HANZA H et al.** A MULTILEVEL SOLITON COMMUNICATION SYSTEM. *JOURNAL OF LIGHTWAVE TECHNOLOGY, IEEE SERVICE CENTER, NEW YORK,* Janvier 1997, vol. 15 (1), ISSN 0733-8724, 6-18
- **JUNG D K et al.** Spectrum-sliced bidirectional passive optical network for simultaneous transmission of WDM and digital broadcast video signals. *ELECTRONICS LETTERS, IEE STEVENAGE,* 01 Mars 2001, vol. 37 (5), ISSN 0013-5194, 308-309
- Single-channel 800 Gbit/s asynchronous all-optical amplitude-division demultiplexing based on polarization-independent Ghz Raman soliton in fiber. **KATO M et al.** POSTDEADLINE PAPERS. SUMMARIES OF PAPERS PRESENTED AT THE CONFERENCE ON LASERS AND ELECTRO-OPTICS. OPT. SOC. AMERICA, 2002, vol. 2, CPDB4-1
- **MOLLENAUER ; MITSCHKE.** Discovery of the soliton self-frequency shift. *Optics Letters,* Octobre 1986, vol. 11 (10), 659-661
- **J.P. GORDON.** Theory of the soliton self-frequency shift. *Optics Letters,* Octobre 1986, vol. 11 (10), 662-664